# EUROPEAN PATENT APPLICATION

(11) **EP 4 410 469 A1**
(43) Date of publication of application: **07.08.2024**
(21) Application number: 23154346.3
(22) Date of filing: 31.01.2023
(51) Int. Cl.: B23K 26/0622, B23K 26/402

(54) **ABLATION OF MATERIALS WITH DOUBLE TIME-SEPARATED LASER PULSES**

(71) Applicant: Vilnius University, 01513 Vilnius (LT)
(72) Inventor: Jukna, Vytautas, 09119 Vinius (LT); Butkus, Simas, 10256 Vilniaus raj., Galgiai (LT); Sulnius, Dangiras, 08212 Vilnius (LT)
(74) Representative: Klimaitiene, Otilija

(57) **Abstract**

Laser ablation and processing of materials is applied in various applications ranging from consumer electronics to specific medical applications. Ultrashort laser pulses used for high-quality processing of transparent materials, are not enough efficient as the laser energy is absorbed via multiphoton absorption, and much of energy is lost. Meanwhile, long pulses (of nanosecond range) rely on heating intrinsic free electrons which may be distributed unevenly in the material, and in combination with the long duration, the heat-affected areas are evident in the processed material. The present invention discloses a method and system of laser ablation with improved efficiency, employing focused femtosecond/picosecond dual-pulse irradiation. The femtosecond pulse first excites local free electrons of the material into the conduction band, and then the excited electrons are heated and multiplied via impact absorption of the subsequent picosecond pulse, resulting in efficient ablation of the material.

## Description

### FIELD OF INVENTION

The present invention relates to the laser ablation of dielectric materials. More specifically, the invention discloses a method to ablate hard and brittle transparent materials, such as fused silica glass, with higher efficiency by using focused femtosecond/picosecond double-pulse irradiation.

### BACKGROUND ART

Laser processing of dielectrics, such as drilling, cutting, ablating, and engraving, is used in the fabrication of optoelectronic devices (for example, photodetectors, laser diodes, imaging detectors), phase masks, diffraction gratings, waveguides, etc.

The US patent US6664498B2 discloses methods and apparatus for material modification using laser bursts including appropriately timed laser pulses to enhance material modification. In one implementation, a method for material modification comprises the steps of: providing bursts of laser pulses, wherein each burst comprises at least two laser pulses, wherein each laser pulse has a pulse duration within a range of between approximately 10 ps and 100 ns, wherein a time between each laser pulse of each burst is within a range of between approximately 5 ns and 5 µs. Directing the bursts upon a workpiece, wherein an intensity of a primary laser pulse of each burst exceeds a damage threshold of the workpiece. This innovation discloses a method for increasing the rate and precision of material removal by pulsed laser radiation.

The US patent application US20210001427A1 describes a laser system for processing material. The system may make use of a laser configured to intermittently generate a first laser pulse of a first duration and a first average power, at a spot on a surface of the material being processed, and a second laser pulse having a second duration and a second peak power. The second duration may be shorter than the first duration by a factor of at least 100 and directed at the spot. The second laser pulse is generated after the first laser pulse is generated. The first laser pulse is used to heat the spot on the surface of the material, while the second laser pulse induces a melt motion and material ejection of molten material from the melt pool. The first laser pulse has a duration of about 10 µs to 500 µs, the second laser pulse has a duration of about 1 µs to 100 µs.

The US patent application US20080015662A1 discloses an apparatus for laser processing of a material, in particular the eye cornea, emits onto the material a train of laser radiation pulses having a pulse duration in the femtosecond range. The pulse train comprises a multiplicity of successive pulse groups, each pulse group comprising at least two laser radiation pulses. The pulses of a pulse group are directed at substantially the same processing site of the material, but the pulses of successive groups are directed at substantially different processing sites of the material. According to the invention, the time interval between successive laser radiation pulses of a pulse group is in the nanosecond range. In particular, the intensity or energy of the pulses within a pulse group is graduated, in such a way that a preceding prepulse has substantially lower intensity or energy than a following main pulse.

The Japanese patent application JP2019130553A provides a laser processing device and a laser processing method that can generate residual stress up to a deep part inside a workpiece. In this laser processing apparatus, the workpiece is irradiated with a foot pulse before the main pulse, thereby generating plasma having a sufficiently low density on the surface of the workpiece. After that, by irradiating the workpiece with a main pulse having a peak intensity higher than the foot pulse within the plasma maintenance time, the plasma acts as a low-density ablator and generates a powerful shock wave increased by the difference in impact impedance. It can be generated inside the workpiece. The delay between pulses is between 1 and 20 ns.

The international patent application WO2015108991A2 describes a method for laser-based material processing of a material. It was discovered, for example, that temporally and spatially overlapping a series of nanosecond pulses from a nanosecond pulse (NS) laser source with a series of ultrashort pulses from an ultrashort pulse (USP) laser source can result in both substantially more depthwise material modification and high machining quality than obtainable with either individual pulse series alone (NS-USP). In some embodiments the pulses may be slightly offset in time, for example, an ultrashort pulse may lead to a nanosecond pulse by a few nanoseconds or more, provided a synergetic interaction occurring in the material, which results in a controlled increase in depthwise material modification.

Prior art methods disclose either the use of synchronization of two lasers or use of the similar duration pulses and/or delays between the pulses longer than the electron-phonon relaxation time. The use of two different lasers produces synchronization errors and a limited laser repetition rate, therefore, the setup is used only with ns pulse durations. The use of the same pulse duration does not initiate different electron absorption mechanisms.

The present invention aims to increase laser ablation efficiency (ablated volume per unit of time per unit of average laser power), using irradiation by the same femtosecond duration laser split into double laser pulses with femtosecond and picosecond pulse duration.

### SUMMARY OF INVENTION

The invention discloses a method and system for laser ablation of materials with improved ablation efficiency (as ablated material per laser pulse energy per unit of time), by using irradiation with focused double femtosecond/picosecond pulses and eliminating the drawbacks indicated above. Specifically in this invention, the first pulse duration is much shorter than the duration of the second pulse where the first laser pulse length is in the femtoseconds range, while the second laser pulse length is in the picoseconds range. The delay between the pulses, energies, and trajectories thereof are arranged so that the material is excited by the first pulse, subsequently, is efficiently ablated by the second pulse due to the amplification of the excited electrons.

**Method.** For material ablation, this invention employs a combination of two pulses that overlap on or inside the ablated material in the region of interest and are delayed relative to each other in time. The first pulse, having the shorter duration of the femtoseconds range, excites electrons in the atoms of the material into the conduction band (mostly, due to multiphoton absorption). Meanwhile, the second pulse, having the longer duration of picoseconds range, causes the excited electrons to absorb the photons due to inverse-bremsstrahlung-absorption, which results in higher absorption of light of the processed material and, therefore, providing laser ablation efficiency higher than in other known laser processing methods.

The use of only ultrashort pulses limits the efficiency of ablation due to the need for multiphoton absorption to excite the material, which needs high intensity for it to be efficient, therefore the lower intensity pulse parts are not participating in the process. The use of only picosecond pulses can efficiently increase the density of electrons in the conduction band but mostly due to amplification of the existing electrons in the conduction band, which are generated by multiphoton absorption or are intrinsic in the material. By combining the femtosecond pulse to produce electrons in the conduction band and the picosecond pulse to efficiently amplify them it is possible to efficiently absorb the laser radiation.

The invention discloses a semiconductor and dielectric material microfabrication, the energy bandgap of which is at least two times larger than the energy of the impinging photons.

Specifically, the present double-pulse laser ablation method for efficient processing is defined by the following essential parameter ranges:
- The first pulse duration range - from 30 to 1000 femtoseconds;
- The second pulse duration range - from 0.4 to 20 picoseconds;
- The time delay between the first and second pulses - from 0 to 45 picoseconds;
- The first and second laser pulses match spatially on the material surface;
- Laser pulse wavelength is in the UV-VIS-IR range from 200 to 1500 nanometers;
- Energies of the double laser pulses are essentially unlimited, although, certain limits are applicable, for example, related to the air-ionization level at which pulse energy losses may occur, thereby reducing the overall efficiency of laser ablation;
- The ratio of the first and the second pulse energy fluence is in the range of 1:1 to 1:1000.

**System.** A laser system, implementing the above laser processing method, comprises a laser source, two compressors-stretchers, and optical elements. The configuration of the laser system is not limited to this specific one, as the skilled person could assemble an optical configuration for the ablation method in multiple ways. The first pulse duration is adjusted in the range from 30 to 1000 femtoseconds, preferably, in the range from 100 to 350 femtoseconds, more preferably, in the range from 200 to 300 femtoseconds. The first pulse is used to create free electrons/plasma above/inside a transparent hard and brittle material (for example, fused silica). The second pulse duration is longer than the first pulse duration (for example, 5 picoseconds, 1 picosecond, 450 femtoseconds). The second pulse is configured to enhance the absorption of the second pulse in the material being ablated. The time delay (within the range from 0 to 45 picoseconds, e.g., 0 ps, 3 ps, 7 ps, 25 ps, 45 ps) between the two pulses can be applied in case to control the laser ablation efficiency.

**Materials processed.** The present invention is efficient for laser processing/ablating various materials characterized as "transparent hard and brittle materials", such as silicon, glass, quartz, fused silica glass, some kinds of ceramic, semiconductors, etc. The limitation of the invention is that the impinging to the material photon energy should be smaller than the bandgap of the material, i.e., transparent material.

### DESCRIPTION OF DRAWINGS

The drawings are provided as a reference to possible embodiments but are not intended to limit the scope of the invention. The drawings and the graphs presented herein should not be considered as limiting the scope of the invention, but merely as an example of a possible embodiment of the invention.
- **Fig. 1**: depicts laser pulse parameters for the double-pulse laser ablation of a transparent hard and brittle material, e.g., fused silica;
- **Fig. 2**: depicts the experimental laser system set up for the double-pulse laser ablation of a transparent hard and brittle material, e.g., fused silica;
- **Fig. 3**: depicts the dependence of ablation efficiency on energy fluence. In the case of ablation by dual pulses, the energy fluence is the sum of the energy fluences of the dual pulses:
**(a)** long pulse duration is 5 ps and no delay;
**(b)** long pulse duration is 1 ps and no delay;
**(c)** long pulse duration is 450 fs and the delay of the long pulse is 7 ps.
- **Fig. 4**: dependence of ablation efficiency on the time delay between pulses, when ***Fₛₕₒᵣₜ*** = 0.5 ***F_{short,th}**.* In the case of dual pulses ablation, the energy fluence is the sum of the energy fluences of the dual pulses:
**(a)** long pulse duration 5 ps;
**(b)** long pulse duration 450 fs.

### DRAWINGS - description of marked objects

**1** Yb:KGW laser;
**2** first pulse stretcher-compressor;
**3** second pulse stretcher-compressor;
**4** first motorized attenuator;
**5** 45° polarizer;
**6** delay line with retroreflector;
**7** second motorized attenuator;
**8** scanner head and telecentric F-Theta lens;
**9** controller;
**10** positioning table;
**11** sample of a material to be ablated by the laser pulses;
**12** the first pulse, of femtoseconds range;
**13** the second pulse, of picoseconds range;
**14** the spatial trajectory of both pulses.

### DETAILED DESCRIPTION OF INVENTION

The most precise micro-processing of materials is obtained using ultrashort (femtosecond) pulse lasers, as this limits thermal diffusion (due to the extremely short pulse interaction with the material being processed) and the material has a fast phase transition from solid to the gaseous state. Moreover, femtosecond lasers in micro-processing result in a low heat-affected zone (HAZ), lower recast areas around the affected area, and higher ablation rates. Despite the above-mentioned advantages of ultrashort pulses, research is underway to increase the efficiency of the micro-processing/ablation process, for example, characterized by an amount of a material removed per minute using one unit of energy.

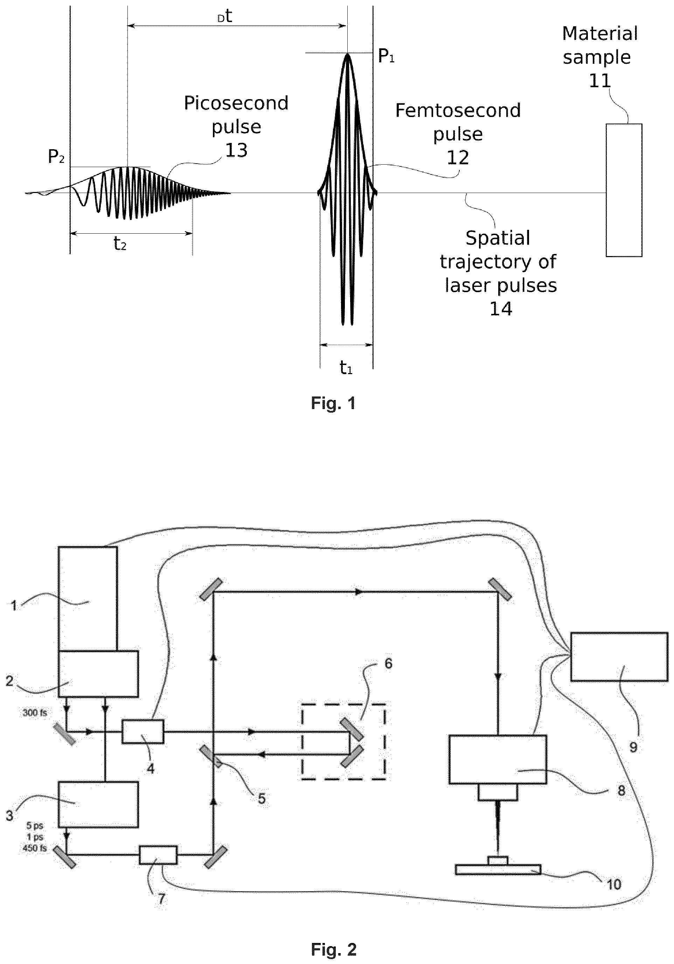

**Method and parameters of laser double-pulses.** The method concept relates to a combination of two laser pulses coming from compressors 2 and 3 in Figure 2, where these two pulses completely overlap in space (by the same trajectory of pulse propagation), and are delayed by _{D}t in time, relative to each other.

The conceptual scheme of double pulses is depicted in Figure 1. In this way, the first pulse 12 (of the shorter duration) excites the electrons in the atoms of the material into the conduction band (mostly, due to multiphoton absorption), in which case the absorption for the second pulse 13 becomes higher as it is being absorbed by the generated electrons via inverse-bremsstrahlung absorption, resulting in a higher ablation efficiency. Combining those two pulses 12 and 13 results in more parameters that can be changed, e.g., peak power P₁ and P₂ of different pulses, durations of different pulses t₁ and t₂, change of pulse polarization p₁ and p₂, temporal overlap by _{D}t, etc.

The present invention is a laser-processing method based on the above-described concept: the first laser pulse 12 (having a shorter duration than the second laser pulse 13, of femtoseconds range) generates free electrons in a nonconducting/transparent media, while the second pulse 13 of picoseconds range is absorbed by the previously generated free electrons, in turn heating the electrons and generating additional free electrons which ultimately transfer their accumulated energy to the lattice, thereby causing the ablation effect.

The effective wavelength of the pulses is in the UV-VIS-IR range from 200 to 1500 nanometers. A more preferable efficient wavelength range is from 340 to 1100 nanometers.

The pulse energy is optionally selected from the range of 1uJ to 10mJ. The higher pulse energies are related to the surrounding air ionization and other artefacts and limitations. Furthermore, the present invention is related to the high efficiency of pulse energies used, therefore, lower pulse energies are preferred.

**System and the experimental setup.** The system setup is presented in Figure 2. The laser system implementing the ablation method comprises:
- an Yb:KGW (potassium gadolinium tungstate) laser (1) with a central wavelength ***λ*** = 1030 nm and a pulse repetition frequency of 50 kHz is used;
- at the end of the laser output are two pulse stretchers-compressors (2 and 3) that are parallel to each other and separated at a certain distance;
- a beam splitter inside the laser (splitting the initial laser beam by two 50 % and 50 %) is inserted before the first stretcher-compressor (2), which reflects half of the beam and directs it through the first stretcher-compressor (2), while the other half of the beam is directed to the second stretcher-compressor (3);
- from the first stretcher-compressor (2) is compressing the pulse to transform limited pulse of 300 fs duration;
- the longer pulses are generated in the second compressor (3) where the pulse is not compressed to transform limited therefore producing longer pulse duration;
- the energy of the pulses and polarization can be tuned by attenuators (4) and (7).
- relative delay between pulses is changed via delay line (6);
- both pulses are combined by the beam combiner (5);
- pulses are focused by a focusing and positioning system (8) onto the sample (10) of the material being processed;
- all the processes are controlled by a computer (9).

Specific embodiments of the method disclose experimental investigating the dual-pulse combinations of:
- 300 fs with 5 ps (*combination I*),
- 300 fs with 1 ps (*combination II*) and
- 300 fs with 450 fs (*combination III*).

In all the cases when such two pulses were used, an increase in ablation efficiency is observed, relative to the use of the individual pulse with the combined energy. The maximum increase effect in ablation efficiency is obtained when the energy fluence of the first (shorter) pulse (***Fₛₕₒᵣₜ***) is half of the damage threshold ***Fₛₕₒᵣₜ*** = 0.5 ***F_{short,th}.***, where ***F_{Short,th}*** is the damage threshold of the material for the short pulse case which in our case was measured to be 3.12 J/cm². The damage threshold of the material is understood as the pulse energy fluence level at which the material experiences irreversible changes, i.e., damages.

*Combination I* (5 ps and 300 fs when pulses are not separated in time) shows the greatest increase in the ablation efficiency, which was 2.2-times higher than in the case of ablation by a single shorter pulse having the same energy level, as both double pulses.

The delay between the pulses is measured from the peaks of the pulses. If pulses are not bell-shaped the delay should be measured from the mass centers of the pulses.

The combination of 5 ps and 300 fs pulses shows more significant changes in ablation efficiency with varying delays (no delay, 3 ps, 7 ps, 25 ps, and 45 ps) than the 450 fs and 300 fs combination. This is expected, as the increase of ablation is associated with the initiation of the avalanche effect. Therefore, nevertheless, the shorter pulses also show an efficiency increase the best case is to have longer pulses in the picoseconds scale, and in the presented experiment - 5ps duration.

To generate double pulses of different duration with the same laser optical scheme presented in Figure 2 was used, where the double compressor was the key to varying both pulse durations individually. The first compressor compresses a pulse to transform for a limited duration of 300fs, while the second compressor can be tuned to produce longer pulses in the picosecond scale.

On the shorter pulse path, there is a first motorized attenuator (4), which comprises a λ/2 phase plate (4) and polarizer (5). Using a computer (9) to control these laser parameters and polarizer angle, it is possible to adjust the passing power through the 45° polarizer (5). Between the λ/2 phase plate and the 45° polarizer, there is a delay line in which the retroreflector (6) is mounted.

On the longer pulse path, the system configuration is the same as in the shorter pulse path: a second motorized attenuator (7) is used, which contains a λ/2 phase plate, and it is controlled with its computer program. By rotating the λ/2 phase plate, passing power through the 45° polarizer is adjusted. Both laser pulses having the same diameter and direction are directed to the beam positioning and focusing system (8) comprising a scanner head and telecentric F-Theta lens. Samples of processed material (in the present experiment fused silica) were placed onto the positioning table (10).

The material used in the method experiments is fused silica which has a bandgap of ~9eV and results in needing 8 photons for multiphoton absorption. In the present invention the pulse repetition rate is ***ω*** = 50 kHz, scanning speed is set to ***v_{sc}*** = 0.375 m/s, which gives spatial shift ***dx*** = 7.5 µm per pulse. The laser beam diameter on the sample is ***D*** = 20 µm FWHM. The ablated area was measured with a profilometer, from which it is possible to calculate the ablation efficiency as the ablated volume per minute per laser power (mm^3/min W).

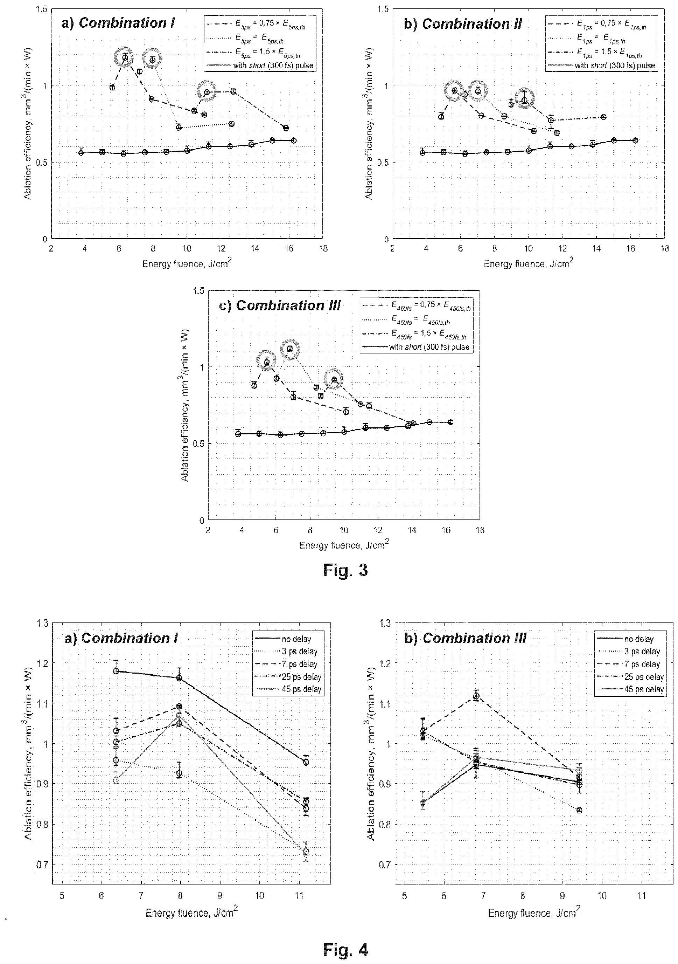

**Results.** Figure 3 depicts the dependence of the ablation efficiency (i.e., the amount of material removed per minute using one unit of energy) on energy fluence. The solid line represents the ablation efficiency dependence on energy fluence when only an ultrashort pulse of 300fs duration was used to ablate the material. As the ablation efficiency of solitary longer pulses is lower than that of ultrashort pulses, the comparison of ablation efficiency is compared only with an ultrashort pulse. The dashed line represents the case, when the longer pulse fluence was 25% lower than the damage threshold of the material, while the short pulse energy was varied to change the energy fluence impinging the material. The dotted line shows the situation when the longer pulse fluence was fixed at the damage fluence, while the dashed-dotted line when the longer pulse fluence was 50% higher than the ablation threshold. Ablation efficiency is plotted for delays between the pulses when the measured laser ablation efficiency is the highest.

For *combinations I* and *II* (Figures 3a and 3b) the highest ablation efficiency was recorded when there was no delay between the short and the long pulses, i.e. the pulses' maximum intensity coincided in time.

Meanwhile, in *combination III* (Figure 5c), the most efficient ablation occurred at a 7 ps delay. Single short pulse ablation efficiency is lower compared to that one when two pulses of different pulse durations are combined, regardless of the delay in the range from 0 to 45ps.

The points outlined with a circle in Figure 3 are the cases when the short pulse has the fluence of half of the ablation threshold and coincides with the ablation efficiency maximums. Therefore the ablation efficiency increases most when the short pulse energy fluence is ***Fₛₕₒᵣₜ*** = 0.5 ***F_{short,th},*** i.e. a single ultrashort pulse is not capable to induce damage, but when both pulses are present, the efficient ablation is initiated. The ablation efficiency using a combination of the two pulses is 1.6-2.2-fold higher than using a single short pulse ablation. The most efficient ablation is achieved with the *combination I* (5 ps and 300 fs pulses). When the fluence of a shorter pulse was 50% lower than the damage threshold, and the longer pulse fluence was 25% lower than the damage threshold. The increase in efficiency is associated with a strong 5 ps pulse absorption by the mostly multi-photon-generated free electrons of the 300 fs pulse.

The ablation efficiency dependence on energy fluence, when the delay between the pulses was varied is depicted in Figure 4. Different lines depict different delays between the pulses (solid - no delay, dotted -3 ps, dashed - 7ps, dashdotted - 25ps, and fine dash - 45ps). In Figure 4, the most efficient pulse combination is presented, i.e., the combination of 300fs and 5ps pulse when the short pulse had fluence fixed at the half-the-damage threshold. Maximum ablation efficiencies are achieved when there is no delay between pulses of 300fs and 5ps (Figure 4a) or the delay between pulses is 7 ps (Figure 4b) for 300fs and 450fs. The laser ablation efficiency of 1.18 mm³/(min·W), was achieved with *the combination I* pulses and efficiency did not change much when energy fluence was slightly varied compared to *Combination II* and is therefore, the efficiency of 0.63 mm³/(min·W) was achieved for using only 300fs pulses.

**Other materials.** The other transparent materials processing parameters should also follow the fused silica trend. The laser photon energy should be lower than the bandgap of the material. For the most efficient ablation, the first femtosecond pulse should have lower energy than the material damage threshold, and the longer pulse should exceed the material damage threshold by no more than 10-fold. The delay between the pulses depends on the relative duration between the two pulses, whilst if the duration differs by the order, the delay should be minimal. Whilst the delay of a few picoseconds is expected to be optimum for the first and second pulses having similar durations.

## Claims

1. A method of laser processing of a dielectric transparent hard and brittle material, wherein said material is processed by focused dual laser pulses (12, 13) wherein the dual pulses (12, 13) are separated by a time-delay (Dt), w her e i n
• the first pulse (12) is configured to excite electrons in the material atoms into the conduction band, and
• the second pulse (13) and the time-delay (Dt) are configured for the inverse-bremsstrahlung-absorption by the excited electrons, wherein the excited electrons present in the unrelaxed state via electron-phonon interaction.

2. The method of claim 1, **wherein**
• the first pulse (12) duration is set in the range from 30 to 1000 femtoseconds,
• the second pulse (13) is set in the range from 0.4 to 20 picoseconds,
• the time delay (Dt) between the first (12) pulse and the second pulse (13) is set in the range from 0 to 45 picoseconds.

3. The method of any claims from 1 to 2, **wherein** the first pulse (12) duration is set in the range from 100 to 350 femtoseconds, more preferably, from 200 to 300 femtoseconds.

4. The method of any claims from 1 to 3, **wherein** the dual pulses (12, 13) overlap on or in the material to be processed.

5. The method of any claims from 1 to 4, **wherein** the wavelength of the dual laser pulses (12, 13) is in the ultraviolet-visible-infrared (UV-VIS-IR) range from 200 to 1500 nanometers, and more preferably, in the range from 340 to 1100 nanometers.

6. The method of any claims from 1 to 5, **wherein** the ratio of the first pulse (12) and the second pulse (13) energies/amplitudes is in the range of 1:1 to 1:1000.

7. The method of any claims from 1 to 6, **wherein** the energy of the dual pulses (12, 13) is essentially subjected to environmental and system limits, such as air-ionization level, at which said laser pulses loose energy, thereby reducing the overall efficiency of the laser ablation.

8. The method of any claims from 1 to 7, **wherein** the energy of the dual pulses (12, 13) is selected from the range of 1uJ to 10mJ.

9. The method of any claims from 1 to 8, **wherein** the energy fluence of the first (12) pulse (*Fₛₕₒᵣₜ*) is half of the damage threshold *Fₛₕₒᵣₜ* = 0.5 *F_{short,th}.*, where *F_{short,th}* is the damage threshold of the material for the first pulse (12) at which the material experiences irreversible changes.

10. The method of any claims from 1 to 9, **wherein** the energy fluence of the second (13) pulse is 25% lower than the damage threshold.

11. The method of any claims from 1 to 10, **wherein** the each of dual pulses (12, 13) have different polarizations *p₁* and *p₂*.

12. The method of any claims from 1 to 11, **wherein** the dielectric transparent hard and brittle materials processed are any of silicon, glass, quartz, fused silica glass, ceramics, and semiconductors.

13. A laser system comprising at least
• a laser source with a configurable central wavelength ***λ*** =from 200 to 1500 nm and a laser pulse repetition frequency from 10 to 1 GHz,
• two pulse stretchers-compressors (2 and 3) that generate separated dual pulses (12, 13) having different durations (t₁, t₂) and separated at a distance providing a time-delay (Dt) between said laser pulses (12, 13);
• further optical elements arranged for overlapping in space the separate laser pulses (12, 13), focusing, and positioning the focused laser pulses (12, 13) onto the material sample being processed,
w her e i n the system is configured to process the material sample (10) according to the method of any of claims of 1 to 12.

14. The system according to claim 13, **wherein** the system comprises
- an Yb:KGW (potassium gadolinium tungstate) laser source (1) providing a pulsed laser beam with a central wavelength in the range ***λ*** =from 200 to 1500 nm and a laser pulse repetition frequency from 10 to 1 GHz,
- two pulse stretchers-compressors (2, 3) at the end of the laser output, those are parallel to each other and separated at a distance defining the a time-delay (Dt),
- the first stretcher-compressor (2) is compressing the first pulse (12);
- the second compressor (3) compressing or stretching the second extended pulse (13);
- a beam splitter inside the laser source, splitting the laser beam by 50%/50%, and inserted before the first stretcher-compressor (2), reflecting 50% of the beam and directs it through the first stretcher-compressor (2), while the other 50% of the laser beam is directed to the second stretcher-compressor (3),
- attenuators (4) and (7) arranged for tuning energy and polarization of the pulses (12, 13),
- a delay line (6) providing relative delay between the pulses (12, 13),
- a beam combiner (5) arranged to combine both pulses (12, 13) in space,
- a focusing and positioning system (8), arranged to focus the pulses onto the material sample (10),
- a computer (9) controlling all processes and method steps.

15. The system of any claims from 13 to 14, **wherein** the material sample (10) being processed is dielectric transparent hard and brittle material such as silicon, glass, quartz, fused silica glass, ceramics, and semiconductors.
